# EUROPEAN PATENT APPLICATION

(11) **EP 4 234 125 A1**
(43) Date of publication of application: **30.08.2023**
(21) Application number: 23155084.9
(22) Date of filing: 06.02.2023
(51) Int. Cl.: B22F 1/05, B22F 1/16, B22F 10/14, B28B 1/00, B33Y 10/00, B33Y 70/10

(54) **THREE-DIMENSIONAL FABRICATING POWDERED MATERIAL, THREE-DIMENSIONAL FABRICATION KIT, AND METHOD OF PRODUCING THREE-DIMENSIONAL FABRICATED OBJECT**

(30) Priority: 24.02.2022 JP 2022026363
(71) Applicant: Ricoh Company, Ltd., Tokyo 143-8555 (JP)
(72) Inventor: MIYATA, Shimpei, Tokyo, 143-8555 (JP); SOGAME, Junjiroh, Tokyo, 143-8555 (JP); MIYAZAKI, Kohsuke, Tokyo, 143-8555 (JP); YOKOYAMA, Takumi, Tokyo, 143-8555 (JP); YAMADA, Saori, Tokyo, 143-8555 (JP)
(74) Representative: SSM Sandmair

(57) **Abstract**

A three-dimensional fabricating powdered material is provided that comprises: a base material comprising an inorganic material and having a mean volume particle diameter of 25 µm or more to 70 µm or less; and an inorganic oxide having a mean volume particle diameter of 120 nm or less, the inorganic oxide attached to the base material.

## Description

### BACKGROUND

### Technical Field

The present disclosure relates to a three-dimensional fabricating powdered material, a three-dimensional fabrication kit, and a method of producing a three-dimensional fabricated obj ect.

### Related Art

Recently, there is a growing need for producing a complex, minute fabricated object made of metal and the like. One technology for dealing with the need is, particularly in view of high productivity, a system where a pre-sintered body is fabricated by a binder jetting system (hereinafter also referred to as "BJ system") and sintered and densified by a powder metallurgy.

As an example of production methods of a fabricated object such as a pre-sintered body derived by a BJ system, a method has been proposed in which a liquid containing a resin as a binder is applied to particles that has sinterable cores and a resin that covers at least a part of the cores and is removable by degradation such as heating (see, e.g., Japanese Translation of PCT International Application Publication No. JP-T-2020-511593).

### SUMMARY

The present disclosure has an object to provide a three-dimensional fabricating powdered material that enables a high accurate fabrication and can provide a three-dimensional fabricated object with high sintering density and high accuracy.

A three-dimensional fabricating powdered material according to the present disclosure as a way to solve the aforementioned problem includes: a base material comprising an inorganic material and having a mean volume particle diameter of 25 µm or more to 70 µm or less; and an inorganic oxide having a mean volume particle diameter of 120 nm or less, attached to the base material.

The present disclosure allows provision of a three-dimensional fabricating powdered material that enables high accurate fabrication and can provide a three-dimensional fabricated object with high sintering density and high accuracy.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

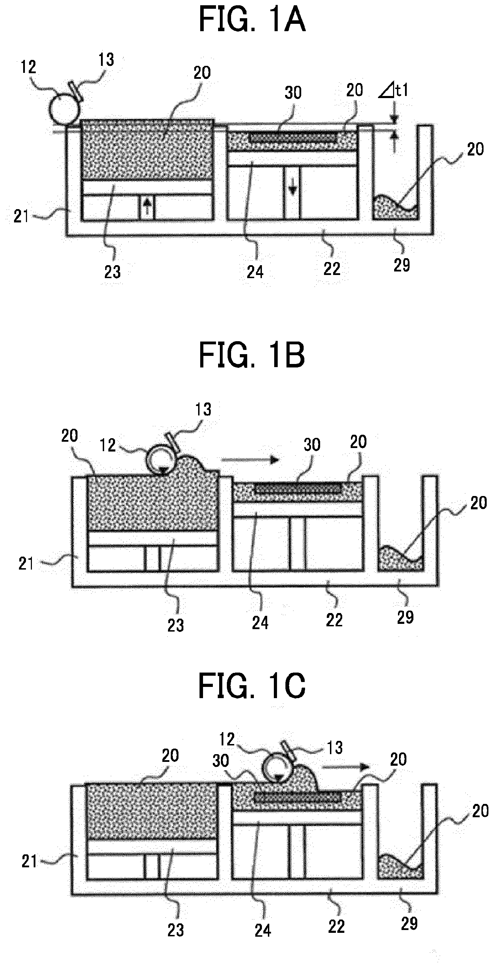

FIG. 1A is a schematic diagram illustrating an operation of a production device of a three-dimensional fabricated object;
FIG. 1B is a schematic diagram illustrating another operation of a production device of a three-dimensional fabricated object;
FIG. 1C is a schematic diagram illustrating another operation of a production device of a three-dimensional fabricated object;

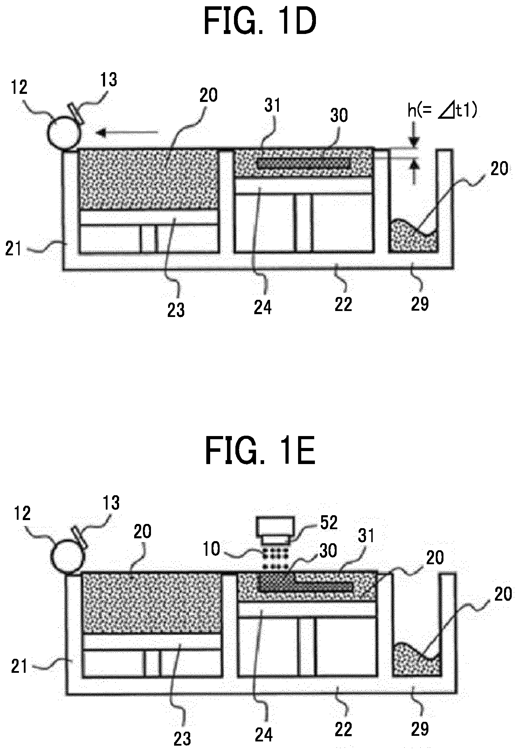

FIG. 1D is a schematic diagram illustrating another operation of a production device of a three-dimensional fabricated object; and
FIG. 1E is a schematic diagram illustrating another operation of a production device of a three-dimensional fabricated object.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

### (Three-dimensional fabricating powdered material)

The three-dimensional fabricating powdered material according to the present disclosure includes: a base material comprising an inorganic material and having a mean volume particle diameter of 25 µm or more to 70 µm or less; and an inorganic oxide having a mean volume particle diameter of 120 nm or less, where the inorganic oxide is attached to the base material.

The three-dimensional fabricating powdered material is a powdered material including: a base material comprising an inorganic material; and an inorganic oxide attached to the base material. The phrase "an inorganic oxide attached to a base material" refers to a state in which the base material and the inorganic oxide have a form of powder or particles, and inorganic oxide particles have been attached on the surfaces of base material particles by applying the inorganic oxide particles to the base material particles. The inorganic oxide particles may also be retained on the base material particles not only by attachment but also by any interaction such as adhesion, absorption, or van der Waals bond.

Conventional technologies employ a three-dimensional fabricating powdered material that comprises a base material covered with resin, and has a problem in that in production of a three-dimensional fabricated object by a binder jetting system, vapor of an organic solvent generated in a process for drying a fabrication liquid containing the organic solvent dissolves a resin in an unfabricated part, and even leads to solidification of the unfabricated part.

In the present disclosure, use of a three-dimensional fabricating powdered material comprising a base material and an inorganic oxide attached to the base material allows provision of a three-dimensional fabricated object without solidification of an unfabricated part in a drying process of a fabrication liquid.

Furthermore, the inventors found that aluminum has particular difficulty in sintering, as a base material, among materials with low sintability such as aluminum (Al), titanium (Ti), and copper (Cu), and needs use of a three-dimensional fabricating powdered material having a high bulk density in order to obtain a sintered body with high sintering density. This is because use of a three-dimensional fabricating powdered material with high bulk density can provide high density since a stage of a three-dimensional fabricated object, which is a pre-sintered precursor.

The three-dimensional fabricating powdered material according to the present disclosure is a powdered material that is used for production of a three-dimensional fabricated object, and comprises a base material comprising an inorganic material and an inorganic oxide attached to the base material.

Production of the three-dimensional fabricated object is performed by a production method of a three-dimensional fabricated object including: a powdered material layer formation process to form a powdered material layer with a three-dimensional fabricating powdered material according to the present disclosure; a fabrication-liquid applying process to apply a fabrication liquid to the powdered material layer; and a stacking process to serially repeat the powdered material layer formation process and the fabrication-liquid applying process to form a stack.

Production of the three-dimensional fabricated object is also preferably performed by a production method of a fabricated object including, in addition to the stacking process described above: a heating process to heat the stack to form a solidified object; a surplus-powder removal process to remove surplus powder, which is powder attached to the solidified object, to obtain a green body; a drying process to dry the green body to remove a liquid component remaining in the green body; a degreasing process to heat the green body to remove resin and the like derived from the fabrication liquid applied, to obtain a degreased body; a sintering process to heat the degreased body to obtain a sintered body; and a post-treatment process to subject the sintered body to a post-treatment.

In the present disclosure, "three-dimensional fabricated object" refers to a generic name of three-dimensional objects that keep a certain three-dimensional shape, and is a concept representing, e.g., a solidified object or a structure derived from a solidified object, and particularly, a solidified object, a green body, a degreased body, a sintered body, etc.

Furthermore, in the present disclosure, the term "pulverulent body" may also be referred to as "powder" or "powdered material". The term "fabrication liquid" may also be referred to as "curing liquid" or "reaction liquid. The term "solidified object" may also be referred to as "cured object". In addition, a three-dimensional fabricated object formed by stacking a solidified object may also be referred to as "green body", "sintered body", "shaped body", or "fabricated object". A substance derived by heat-treating and degreasing a "green body" may also be referred to as "degreased body". Collectively, "green body" and "degreased body" may also be referred to as "pre-sintered body".

### <Base Material>

The base material is not particularly limited if having a shape of powder or particles, can be appropriately selected according to its purpose, and is preferably made of an inorganic material.

The inorganic material is not particularly limited if containing an inorganic material, may contain a material other than inorganic materials, and preferably contains an inorganic material as a main material. The phrase "contain an inorganic material as a main material" indicates that the proportion of the inorganic material relative to the base material is 50% or more by mass, preferably 60% or more by mass, more preferably 70% or more by mass, even more preferably 80% or more by mass, and particularly preferably 90% or more by mass.

Examples of the inorganic material include metal, ceramics, carbon, sand, and magnetic materials. Among these, in view of obtaining a three-dimensional fabricated object with extremely high strength, preferable is metal and ceramics that can be eventually subjected to sintering treatment (process).

Examples of metals include magnesium (Mg), aluminum (Al), titanium (Ti), vanadium (V), chromium (Cr), manganese (Mn), iron (Fe), cobalt (Co), nickel (Ni), copper (Cu), zinc (Zn), yttrium (Y), zirconium (Zr), niobium (Nb), molybdenum (Mo), lead (Pd), silver (Ag), indium (In), tin (Sn), tantalum (Ta), tungsten (W), neodymium (Nd), and alloys of these metals. Each of these metals may be used alone or in combination with others. Among these, preferable is stainless (SUS) steel, iron (Fe), copper (Cu), silver (Ag), titanium (Ti), magnesium (Mg), zinc (Zn), aluminum (Al), or alloys of these metals, more preferable is aluminum, stainless steel, titanium, copper, or alloys of these metals, and particularly preferable is aluminum alloy.

Examples of aluminum alloys include AlSi₁₀Mg, AlSi₁₂, AlSi₇Mg_{0.6}, AlSi₃Mg, AlSi₉Cu₃, Scalmalloy, ADC₁₂, and AlSi₃.

Examples of ceramics include oxides, carbides, nitrides, and hydroxides.

Examples of oxides include metal oxides. Examples of metal oxides include silica (SiOz), alumina (Al₂O₃), zirconia (ZrOz), and titania (TiOz).

As the base material, a commercially available product can be used. Examples of the commercially available product include pure Al (manufactured by Toyo Aluminum K. K., A1070-30BB), pure Ti (manufactured by Osaka Titanium Technologies Co., Ltd.), SUS316L (manufactured by Sanyo Special Steel Co., Ltd., product name: PSS316L); AlSi₁₀Mg (manufactured by Toyo Aluminum K. K., Si10Mg30BB); SiOz (manufactured by Tokuyama Corporation, product name: EXCELICA SE-15K), AlOz (manufactured by Taimei Chemicals Co., Ltd., product name: TIMICRON TM-5D), and ZrOz (manufactured by Tosoh Corporation, product name: TZ-B53).

The mean volume particle diameter of the base material is 25 µm or more to 70 µm or less, more preferably 26 µm or more to 70 µm or less, even more preferably 28 µm or more to 60 µm or less, and particular preferably 32 µm or more to 50 µm or less.

When the base material has a mean volume particle diameter of 25 µm or more to 70 µm or less, a high-density sintered body can be provided. When the base material has a mean volume particle diameter of less than 25 µm, it is difficult to provide a high-density sintered body. Meanwhile, when the base material has a mean volume particle diameter of more than 70 µm, the formation process of a thin powder layer as described above generates a crack in the thin powder layer, and cannot provide a homogeneous thin powder layer.

The particle size distribution of the base material is not particularly limited and can be appropriately selected according to its purpose, and is preferably a particle size distribution with more sharpness.

The mean volume particle diameter and particle size distribution of the base material can be measured using a known particle-size measurement device, and examples thereof include a particle size distribution measurement device (MICROTRAC MT3000II, manufactured by MicrotracBEL Corp.)

Metal particles as the base material are not particularly limited, and can be produced by a conventionally known method. Examples of a method for producing metal particles include pulverization to apply compression, impact, friction, or the like to fragment a solid; atomization to spray a melt liquid to provide quenched powder; precipitation to precipitate a component dissolved in a liquid; and a gas phase reaction to undergo vaporization to cause crystallization. Among these, atomization is preferable in view of providing a globular shape and less variation in particle diameter. The atomization is not particularly limited and can be appropriately selected according to its purpose, and examples thereof include water atomization, gas atomization, centrifugal atomization, and plasma atomization.

Additionally, while a conventionally known method employs metal particles having a metallic base material and a covering resin covering the base material, applies a liquid to the metal particles, thereby causing exertion of a binder function in the covering resin and producing a fabricated object, the present disclosure includes a fabrication liquid containing a resin having a binder function. Thus, metal particles may or may not have a surface covered with a resin. Use of metal particles not covered with a resin enables prevention of binding of metal particles to one another by a covering resin via a heating process and forming an undesired solidified object even in e.g., a powder area not applied with a fabrication liquid (i.e., unfabricated area).

The phrase "have a surface not covered with a resin" indicates that, e.g., a ratio of the surface area of a resin relative to the surface area of metal particles (i.e., surface coverage) is less than 15%, and the surface coverage may be 0%. The surface coverage can be derived by, e.g., obtaining a photo of metal particles, and measuring a ratio (%) of the area of a part covered with a resin relative to the total surface area of a metal particle within a region displayed in a two-dimensional photo. Judgement for the part covered with the resin can employ, e.g., an element mapping technique with energy dispersive X-ray spectroscopy such as SEM-EDS.

### <Inorganic Oxide>

Examples of the inorganic oxide include SiOz, TiOz, Al₂O₃, ZrOz, zinc oxide, and magnesium oxide. Among these, SiOz is preferable in view of less effect of reduction in density of a sintered body.

The mean volume particle diameter of the inorganic oxide is 120 nm or less, preferably 7 nm or more to 120 nm or less, more preferably 7 nm or more to 100 nm or less, even more preferably 7 nm or more to 50 nm or less, particularly preferably 7 nm or more to 20 nm or less, and most preferably 7 nm or more to 12 nm or less.

When the mean volume particle diameter of the inorganic oxide is 7 nm or more to 120 nm or less, a spacer effect causes significant reduction in adhesion strength between particles (powder), thus providing significantly improved flowability. This allows formation of a uniform, high-density powder bed, thus providing significantly improved density of a three-dimensional fabricated object thus produced (green body). Moreover, the uniform, high-density powder bed also has uniform permeability of a fabrication liquid, thus allowing formation of a three-dimensional fabricated object with uniformity, good hardness and accuracy. Since the three-dimensional fabricated object thus obtained includes the base material with high density, a sintered body derived by sintering or the like of the three-dimensional fabricated object includes a smaller number of unnecessary gaps, thus providing a good-looking appearance.

Furthermore, when the mean volume particle diameter of the inorganic oxide is 12 nm or less, a spacer effect is more pronounced on a three-dimensional fabricating powdered material having a small particle diameter of 10 µm or less, thus increasing an effect for improving flowability. This enables use of a base material with a smaller particle diameter, and allows improvement in sinterability and surface roughness of a fabricated object.

A material with the inorganic oxide having the mean volume particle diameter of less than 7 nm has difficulty to be produced and thus cannot be used. When the mean volume particle diameter of the inorganic oxide is more than 120 nm, a distance between particles in sintering is too large to join adjacent particles to one another in a liquid phase and causes generation of a pore inside a sintered body, thereby reducing the density of the sintered body.

The mean volume particle diameter of the inorganic oxide can be measured with e.g., a nanoparticle size measurement device (NANOTRAC FLEX, Manufactured by MicrotracBEL Corp.)

The inorganic oxide is preferably surface-treated with a treatment agent containing at least any of dimethyldichlorosilane (DDS), hexamethyldisilazane (HMDS), polydimethylsiloxane, or aminosilane.

The applied amount of the inorganic oxide relative to the base material is preferably 0.005% or more by mass to 1% or less by mass, and more preferably 0.025% or more by mass to 0.1% or less by mass. When the applied amount of the inorganic oxide is less than 0.005% by mass, a spacer effect is not sufficiently exerted, thus reducing flowability. Corresponding to this, the quality of fabrication may be significantly degraded. When the applied amount of the inorganic oxide is 1% or more by mass, the inorganic oxide may fail to be uniformly added on a surface of the base material.

The base material can contain other components if required.

Examples of other components include a sintering auxiliary.

A sintering auxiliary is a material effective for improving sintering efficiency in sintering a fabricated object. Use of a sintering auxiliary enables, e.g., improvement in strength of a fabricated object, reduction in sintering temperature, and shortening of sintering time.

### (Three-dimensional Fabrication Kit)

The three-dimensional fabrication kit according to the present disclosure includes the three-dimensional fabricating powdered material according to the present disclosure and a fabrication liquid containing a resin and an organic solvent, and if required, may include other components such as a powder removal liquid. The three-dimensional fabrication kit should include the three-dimensional fabricating powdered material and the fabrication liquid separately and independently, and is not limited to an integrated form of a fabrication liquid storage unit storing the fabrication liquid with a three-dimensional fabricating powdered material storage unit storing the three-dimensional fabricating powdered material. For example, even when the fabrication liquid and the three-dimensional fabricating powdered material are separately stored in independent storage units, the three-dimensional fabrication kit still includes them in the case of intending a combination use of the three-dimensional fabricating powdered material and the fabrication liquid, in the case of substantially guiding a combination use of the three-dimensional fabricating powdered material and the fabrication liquid, or the like.

As a three-dimensional fabricating powdered material in the three-dimensional fabrication kit, the three-dimensional fabricating powdered material according to the present disclosure as described above can be used.

### fabrication Liquid>

The fabrication liquid contains a resin, and preferably contains an organic solvent, and further contains other components if required.

### -Resin-

The resin has high affinity with the base material and an adhesive effect. The resin can adhere to the base material, thereby providing further enhanced strength and improved solvent resistance of the three-dimensional fabricated object thus obtained.

The resin can be used if soluble in the fabrication liquid, and preferably has low solubility in water and sufficient solubility in an organic solvent.

The resin is not particularly limited if having a water solubility of 0.5 (g/100g-H₂O) or less (soluble in a range of 0.5 g or less in 100 g of water at 25°C), and examples thereof include acrylic resins, acrylic polyol resins, polyester resins, epoxy resins, polyol resins, urethane resins, polyether resins, polyvinyl butyral resins, polyvinyl acetal resins, polyvinyl chloride resins, polyvinyl acetate resins, paraffin-olefin-based resins, and ethyl cellulose.

In addition, the resin is not particularly limited if exhibiting solubility in the fabrication liquid, may be a homopolymer (single polymer) or a heteropolymer (copolymer), and may also be denatured or have a known functional group introduced. Each of these resins can be used alone or in combination with others.

The resin may be a commercially available product. Examples of the commercially available product include polyvinyl butyral (manufactured by Sekisui Chemical Co., Ltd., BM-5), a copolymer of vinyl acetate and vinyl chloride (manufactured by Nissin Chemical Industry Co., Ltd., SOLBIN A), polyacrylic polyol (manufactured by DIC Corporation, ACRYDIC WFU-580, etc.), polyester polyol (manufactured by DIC Corporation, POLYLITE OD-X-668, etc.; manufactured by ADEKA Corporation, ADEKANEW ACE YG-108, etc.), polybutadiene polyol (manufactured by Nippon Soda Co., Ltd., GQ-1000, etc.), polyvinyl butyral, polyvinyl acetal (manufactured by Sekisui Chemical Co., S-LEC BM-2, KS-1, etc.; manufactured by Kuraray Co., Ltd., MOWITAL B20H, etc.), acrylic polyol (manufactured by Taisei Fine Chemical Co., Ltd., 6AN-6000), and ethyl cellulose (manufactured by Nissin-Kasei Co., Ltd., ETHOCEL).

The content of the resin is not particularly limited, can be appropriately selected according to its purpose, and is preferably 1.0% or more by mass to 50% or less by mass relative to the total amount of the fabrication liquid, and more preferably 10% or more by mass to 30% or less by mass. When the content of the resin is 1.0% or more by mass to 50% or less by mass, the three-dimensional fabricated object thus obtained can avoid shortage of strength, and a curing liquid can avoid increase in viscosity or gelation, thus preventing reduction in liquid preservability, viscosity stability, and the like.

### -Organic Solvent-

The organic solvent is not particularly limited if having solubility for the resin, and can be appropriately selected according to its purpose.

Examples of the organic solvent include aliphatic compounds, aromatic compounds, ketones, esters, and sulfoxides.

Examples of aliphatic compounds include alcohol and ethylene glycol.

Examples of aromatic compounds include toluene and xylene.

Examples of ketones include acetone and methylethylketone.

Examples of esters include butyl acetate, ethyl acetate, propyl acetate, methyl acetate, and diethyl succinate.

Examples of sulfoxides include dimethylsulfoxide.

The content of the organic solvent is preferably 30% or more by mass to 90% or less by mass relative to the total amount of the fabrication liquid, and more preferably 50% or more by mass to 80% or less by mass. When the content of the organic solvent is 30% or more by mass to 90% or less by mass, the resin can improve in solubility, thus increasing strength of the three-dimensional fabricated object. Such content can also lead to prevention of drying a nozzle in a device unoperated (during standby), thus suppressing clogging of a liquid or failure of discharge.

The fabrication liquid does not contain water substantially. The phrase "not contain water substantially" in the present disclosure indicates that the content of water is 10% or less by mass, preferably 5% or less by mass, more preferably 3% or less by mass, and even more preferably 1% or less by mass relative to the total amount of the fabrication liquid, and the fabrication liquid particularly preferably contains no water. Substantial absence of water in the fabrication liquid can further improve solubility of the resin, and correspondingly, further reduce viscosity of the fabrication liquid. The absence of water also prevents formation of hydrogel holding plenty of water around the resin, thus suppressing a corresponding increase in viscosity of the fabrication liquid. Therefore, for example, an ink-jet system can appropriately discharge the fabrication liquid. In addition, the phrase "the fabrication liquid contains no water substantially" indicates that water is not actively used as a material in production of the fabrication liquid, or that the content of water in the fabrication liquid is not more than a detection limit in use of a known, technically-common technique.

Substantial absence of water in the fabrication liquid also allows application of the fabrication liquid even when a material forming inorganic particles is highly active metal, i.e., water prohibitive material (e.g., aluminum, zinc, magnesium, or alloy thereof). For instance, aluminum forms a film of aluminum hydroxide by contacting water and thus has a problem in that a larger content of water in the fabrication liquid causes reduction in sintering density of a sintered body, but the problem is eliminated by absence of water in the fabrication liquid. For another instance, aluminum generates hydrogen by contacting water and thus has a problem of difficulty in handling, but the problem is also eliminated by absence of water in the fabrication liquid.

### -Other components-

Other components can be appropriately selected in view of various conditions such as the type of a means for application, frequency of use, and an amount of the fabrication liquid, e.g., in view of an effect on a nozzle head, such as clogging, in an ink-jet printer or the like when applying the fabrication liquid by ink-jetting.

Examples of other components include a preservative, an antiseptic, a stabilizer, and a pH adjuster.

Methods for preparing the fabrication liquid is not particularly limited and can be appropriately selected according to its purpose, and examples thereof include a method of adding, mixing, and dissolving a resin, and if required, other components described above, in an organic solvent.

The viscosity of the fabrication liquid at 25°C is preferably 5 mPa·s or more to 50 mPa·s or less, and more preferably 10 mPa·s or more to 25 mPa·s or less.

When the viscosity of the fabrication liquid falls in the range described above, discharge from a fabrication-liquid application means such as an ink-jet head is stabilized, thus improving dimension accuracy of a three-dimensional fabricated object.

### (Method of Producing Three-dimensional Fabricated Object)

The method of producing the three-dimensional fabricated object according to the present disclosure includes: a powdered material layer formation process to form a powdered material layer with a three-dimensional fabricating powdered material according to the present disclosure; a fabrication-liquid applying process to apply a fabrication liquid to the powdered material layer; and a stacking process to serially repeat the powdered material layer formation process and the fabrication-liquid applying process to form a stack.

The method of producing a fabricated object may further include: a heating process to heat the stack to form a solidified object; a surplus-powder removal process to remove surplus powder, which is powder attached to the solidified object, to obtain a green body; a drying process to dry the green body to remove a liquid component remaining in the green body; a degreasing process to heat the green body to remove resin and the like derived from the fabrication liquid applied to obtain a degreased body; a sintering process to heat the degreased body to obtain a sintered body; and a post-treatment process to subject the sintered body to a post-treatment.

### <Powdered Material Layer Formation Process>

The powdered material layer formation process is a process to form a powdered material layer with use of a three-dimensional fabricating powdered material comprising: a base material containing an inorganic material and having a mean volume particle diameter of 25 µm or more to 70 µm or less; and an inorganic oxide having a mean volume particle diameter of 120 nm or less, attached to the base material, and is performed with a powder layer formation means.

The powdered material layer is formed on a support (on a fabrication stage). Methods for arranging powder on a support to form a thin layer of the powder is not particularly limited and can be appropriately selected according to its purpose, and examples thereof include a method that employs a known counter rolling machinery (counter roller) used in a selective laser sintering described in Japanese Patent No. 3607300 or the like; a method that spreads powder with a member such as a brush, a roller, or a blade; a method that presses and enlarges the surface of powder with a pressing member; and a method that employs a known stacking fabrication device.

In formation of a powder layer with use of a powder layer formation means such as a counter rolling machinery (counter roller), a brush, a blade, or a pressing member, the following method can be employed and performed, for example.

In other words, powder is mounted on a support disposed so as to move up and down with sliding an inside wall of an outer frame (sometimes also referred to as "die", "hollow cylinder", "tubular structure", etc.), using a counter rolling machinery (counter roller), a brush, a roller, a blade, or a pressing member. In addition, when employing a support that can move up and down inside the outer frame, the support is placed at a slightly lower position relative to the upper end opening of the outer frame (i.e., located at a lower position by the height of one layer of the powder layer), followed by mounting the powder on the support. In this manner, a thin layer of the powder can be mounted on the support.

The height of the powdered material layer is not particularly limited, can be appropriately selected according to its purpose, and is, e.g., preferably 30 µm or more to 500 µm or less, and more preferably 60 µm or more to 300 µm or less in the mean height per layer.

When the mean height is 30 µm or more, a solidified object formed by applying the fabrication liquid to powder can be provided with improved strength, thus preventing deformation or the like potentially occurring in a later step such as the sintering process. Moreover, when the mean height is 500 µm or less, a fabricated object derived from a solidified object formed by applying the fabrication liquid to powder has improved dimension accuracy.

The mean height is not particularly limited, and can be measured according to a known method.

In addition, powder to be supplied with a powder layer formation means may be stored in a powder storage unit. The powder storage unit is a member that stores the powder such as a container, and examples thereof include a reservoir chamber, a bag, a cartridge, and a tank.

### <Fabrication-liquid Applying Process>

The fabrication-liquid applying process is a process to apply the fabrication liquid to the powdered material layer formed in the powdered material layer formation process, and is performed with a fabrication-liquid applying means.

A method for applying the fabrication liquid to the powdered material layer is preferably a method of discharging the fabrication liquid. The method of discharging the fabrication liquid is not particularly limited and can be appropriately selected according to its purpose, and examples thereof include dispenser systems, spray systems, and ink-jet systems. Among these, dispenser systems provide well-fixed quantity of droplets, but result in a narrower coated area. Spray systems can easily form a minute discharged object, provide a wide coated area and have good coating performance, but have poorly-fixed quantity of droplets and generate scattering of the fabrication liquid due to a spray flow. Accordingly, ink-jet systems are preferable. Ink-jet systems have advantages in better-fixed quantity of droplets compared to spray systems, and capability to provide a wider coated area compared to dispenser systems, and thus is preferable in that it can form a complex fabricated object with high accuracy and efficiency.

In use of inkjetting, a fabrication-liquid applying means that discharges and thereby applies the fabrication liquid is an ink-jet head having a nozzle that discharges the fabrication liquid. As the ink-jet head, an ink-jet head in a known ink-jet printer can be preferably used. Examples of an ink-jet head in an ink-jet printer include industrial ink-jet RICOH MH/GH SERIES manufactured by Ricoh Company, Ltd. Examples of an ink-jet printer include SG7100 manufactured by Ricoh Company, Ltd.

The fabrication liquid to be supplied to a fabrication-liquid applying means may be stored in the fabrication liquid storage unit. The fabrication liquid storage unit is a member, such as a container, that stores the fabrication liquid, and examples thereof include a reservoir chamber, a bag, a cartridge, and a tank.

### <Stacking Process>

The stacking process is a process to form a stack by serially repeating the powdered material layer formation process and the fabrication-liquid applying process, and is performed with a stacking means.

The term "stack" is a structure that includes a stack of a plurality of the powdered material layers having an area where the fabrication liquid is applied. In addition, the structure may not include any three-dimensional object with keeping a certain three-dimensional shape inside, or may include a three-dimensional object with keeping a certain three-dimensional shape inside.

The stacking process includes a process to mount powder on a thin layer (powdered material layer formation process), and a process to apply the fabrication liquid on the thin layer (fabrication-liquid applying process). This forms a fabrication-liquid-applied area within the powdered material layer. The stacking process includes further processes on a thin layer of a powder layer having a fabrication-liquid-applied area; a process to mount (stack) powder on the thin layer in the same manner as described above (powdered material layer formation process), and a process to apply the fabrication liquid on the thin layer (fabrication-liquid applying process). This forms an area where the fabrication liquid is applied on the powdered material layer newly stacked. Note that a fabrication-liquid-applied area produced on the uppermost thin layer of stacked powder continues to a fabrication-liquid-applied area in a thin powder layer present beneath. This provides a fabrication-liquid-applied area having a height of two powder layers.

### <Heating Process>

The heating process is a process to heat the stack formed in the stacking process, thereby forming a solidified object, and is performed with a heating means.

The term "solidification" indicates making an object keep a certain shape. The term "solidified object" is a structure having a three-dimensional object keeping a certain three-dimensional shape. A solidified object also indicates an object that does not experience the surplus-powder removal process, which removes surplus powder, which is powder not contained in the three-dimensional object.

Heating temperature in the heating process is preferably higher than a softening point of the resin. This allows the resin to function as a binder that binds inorganic particles to one another in a fabrication-liquid-applied area, thus forming a pre-sintered fabricated object such as a solidified object and a green body derived from a solidified object.

The heating means is not particularly limited and can be appropriately selected according to its purpose, and examples thereof include a drier and a thermostat humidistat chamber.

### <Surplus-powder Removal Process>

The surplus-powder removal process is a process to remove surplus powder, which is powder attached to a solidified object, and obtain a green body, and is performed by a surplus-powder removing means.

The term "green body" refers to a three-dimensional object maintaining a certain three-dimensional shape via the surplus-powder removal process, which removes surplus powder that is powder not contained in a solidified object, and preferably indicates a three-dimensional object to which the surplus powder is not substantially attached.

The surplus-powder removal process also preferably include a process selected from a process to remove surplus powder from a solidified object with air blow, and a process to immerse a solidified object in a removal liquid, thereby removing surplus powder from the solidified object, and more preferably include both of the processes.

The solidified object after the heating process is embedded in surplus powder that is powder having none of the fabrication liquid applied. If the solidified object is picked up from such embedded condition, surplus powder is attached on the surface, inside, and the like of the solidified object, and has difficulty to be removed with ease. This is more difficult in the solidified object having a complex surface shape, the solidified object having an inner structure with a flow pass, and the like. Since a pre-sintered fabricated object fabricated with a common binder jetting system does not have high strength, increase in pressure of air blow from a blast means potentially causes collapse of the fabricated object.

Meanwhile, a solidified object formed with the fabrication liquid in the present disclosure is formed of the resin described above, and thus has improved flexural strength, thereby having strength durable to pressure of air blow. In addition, the flexural strength of the solidified object is preferably 3 MPa or more, and more preferably 5 MPa or more in three-point bending stress.

### -Removal Liquid-

The removal liquid contains an organic solvent, and if required, further contains other components. Note that in order to distinguish an organic solvent contained in the fabrication liquid from an organic solvent contained in the removal liquid, the organic solvent contained in the fabrication liquid may be referred to as first organic solvent, and the organic solvent contained in the removal liquid may be referred to as second organic solvent.

Examples of the organic solvent include ketones, halides, alcohols, esters, ethers, hydrocarbons, glycols, glycol ethers, glycol esters, pyrrolidones, amides, amines, and carbonic esters.

Examples of ketones include acetone, methyl ethyl ketone, diethyl ketone, methyl propyl ketone, methyl isobutyl ketone, methyl amyl ketone, cyclohexanone, isophorone, acetophenone, and diacetone alcohol.

Examples of halides include methylene chloride, trichloroethylene, perchloroethylene, HCFC141-b, HCFC-225, 1-bromopropane, chloroform, and orthodichlorobenzene.

Examples of alcohols include methanol, ethanol, butanol, isobutanol, isopropyl alcohol, normal-propyl alcohol, tertiary-butanol, secondary butanol, 1,3-butanediol, 1,4-butanediol, 2-ethylhexanol, and benzyl alcohol.

Examples of esters include methyl acetate, ethyl acetate, butyl acetate, isobutyl acetate, sec-butyl acetate, methoxybutyl acetate, 3-methoxybutyl acetate, 3-methoxy-3-methylbutyl acetate, ethyl-3-ethoxypropionate, amyl acetate, normal-propyl acetate, isopropyl acetate, methyl lactate, ethyl lactate, butyl lactate, propylene glycol monomethyl ether acetate, propylene glycol monomethyl ether propionate, ethyl 3-ethoxypropionate, and dibasic ester (DBE).

Examples of ethers include dimethyl ether, ethyl methyl ether, diethyl ether, ethylene oxide, tetrahydrofuran, furan, benzofurane, diisopropyl ether, Methyl Cellosolve, Ethyl Cellosolve, Butyl Cellosolve, 1,4-dioxane, methyl tert-butyl ether (MTBE), ethylene glycol dimethylether, diethylene glycol dimethyl ether, ethylene glycol diethyl ether, diethylene glycol diethyl ether, triethylene glycol dimethyl ether, diethylene glycol dibutyl ether, dipropylene glycol dimethyl ether, and dipropylene glycol monomethyl ether.

Examples of hydrocarbons include benzene, toluene, xylene, solvent naphtha, normal-hexane, isohexane, cyclohexane, ethylcyclohexane, methylcyclohexane, cyclohexene, cycloheptane, cyclopentane, heptane, pentamethylbenzene, pentane, methylcyclopentane, normal-heptane, isooctane, normal-decane, normal-pentane, isopentane, mineral spirit, dimethylsulfoxide, and linear alkylbenzene.

Examples of glycols include ethylene glycol, diethylene glycol, triethylene glycol, propylene glycol, and dimethoxytetraethylene glycol.

Examples of glycol esters include ethylene glycol monoethyl ether acetate, and diethylene glycol monobutyl ether acetate.

Examples of glycol ethers include Methyl Carbitol, Ethyl Carbitol, Butyl Carbitol, and methyltriglycol.

Examples of pyrrolidones include 2-pyrrolidone, N-ethyl-2-pyrrolidone, and N-methyl-2-pyrrolidone.

Examples of amides include dimethylformamide, dimethylacetoamide, and formamide.

Examples of amines include tetramethylethylene diamine, N,N-diisopropylethylamine, ethylenediamine, triethylamine, diethylamine, aniline, pyrrolidine, piperidine, morpholine, pyrrole, pyridine, pyridazine, oxazole, thiazole, and 1,3-dimethyl-2-imidazoridinone.

Examples of carbonic esters include diethyl carbonate, dimethyl carbonate, propylene carbonate, and ethylmethyl carbonate.

Examples of other components in the removal liquid include a surfactant, an antifoamer, an antiseptic antifungal, a pH adjuster, a chelator, and a rust inhibitor.

### <Drying Process >

The drying process is a process to dry a green body to remove a liquid component, such as the removal liquid, remaining in the green body, and is performed with a drying means.

The drying process may remove not only a liquid component, such as the removal liquid, contained in a green body, but also an organic matter.

The drying means is not particularly limited and can be appropriately selected according to its purpose, and examples thereof include a known drier and thermostat humidistat chamber.

### <Degreasing Process>

The degreasing process is a process to heat a green body, thereby forming a degreased body with the resin removed out, and is performed with a degreasing means.

The term "degreased body" refers to a three-dimensional object derived by degreasing an organic component, such as the resin, from a green body.

The degreasing process employs a degreasing means, and degrades and removes an organic component, such as the resin, by heating a green body at a temperature equal to or higher than the pyrolysis temperature of the organic component and lower than the melting point or solidus temperature of a material (metal) forming metal particles (e.g., about 570°C in use of AlSi₁₀Mg particles) for certain hours (e.g., 1-10 hours).

The degreasing means is not particularly limited and can be appropriately selected according to its purpose, and examples thereof include a known sintering furnace and electric furnace.

### <Sintering Process>

The sintering process is a process to heat the degreased body formed in the degreasing process, thereby forming a sintered body, and is performed with a sintering means.

The term "sintered body" refers to a three-dimensional object that is formed with integrating a metal material forming metal particles as inorganic particles, and is formed by sintering the degreased body.

The sintering process employs a sintering means, and integrates a metal material forming metal particles as inorganic particles by heating a degreased body at a temperature equal to or higher than solidus temperature of the metal material forming metal particles (e.g., about 570°C in use of AlSi₁₀Mg particles) and equal to or lower than the liquidus temperature (e.g., about 600°C in use of AlSi₁₀Mg particles) for certain hours (e.g., 1-10 hours).

The sintering means is not particularly limited and can be appropriately selected according to its purpose, and examples thereof include a known sintering furnace. The sintering means may be a means identical to the degreasing means described above. The degreasing process and the sintering process may be performed serially.

### <Post-treatment Process>

Production methods of a fabricated object preferably include a post-treatment process that subjects a sintered body to post-treatment. The post-treatment process is not particularly limited and can be appropriately selected according to its purpose, and examples thereof include a surface protection process and a painting process.

The surface protection process is a process to form a protective layer on the three-dimensional fabricated object (green body) that has a stack of solidified objects formed in the solidified object formation process. The surface protection process can provide a solidified object surface with e.g., durability to allow use of the solidified object as is. Particular examples of the protective layer include a waterproof layer, a weatherproof layer, a lightproof layer, a heat-insulating layer, and a luster layer.

Examples of a surface protecting means include a known surface protection device, such as a spray device and a coating device.

The painting process is a process to perform painting on the three-dimensional fabricated object (green body) having a stack of the solidified objects formed in the solidified object formation process. The painting process enables coloring of the green body to a desired color.

Examples of a painting means include a known painting device, such as a painting device with a spray, a roller, a brush, or the like.

### <Flow of Fabrication>

Hereinafter, a flow of fabrication in the production method of a fabricated object according to the present disclosure will be described with reference to FIG. 1A-FIG. 1E. FIG. 1A-FIG. 1E are schematic diagrams illustrating an operation of a production device for a fabricated object.

A production device of a fabricated object has a supply chamber 21, a fabrication chamber 22, and a surplus powder receiving chamber 29, and the supply chamber 21 and the fabrication chamber 22 have a supply stage 23 and a fabrication stage 24 that can move up and down, respectively. Three-dimensional fabrication powder 20 is mounted on the fabrication stage 24 disposed in the fabrication chamber 22, thereby forming a powder layer 31 formed of the powder 20.

First, description will be made for a state after a fabrication-liquid applied layer 30 of a first layer is formed on the fabrication stage 24 of the fabrication chamber 22. When a next layer of inorganic particle-containing powder is formed on the fabrication-liquid applied layer 30, which is a first layer, the supply stage 23 of the supply chamber 21 is moved up, and the fabrication stage 24 of the fabrication chamber 22 is moved down, as depicted in FIG. 1A. At that time, a descent distance of the fabrication stage 24 is set such that an interval (stacking pitch) between the top face of the powder layer and the bottom face (the lower tangent part) of a flattening roller 12 in the fabrication chamber 22 is Δt1. The interval Δt1 is not particularly limited, and preferably about several tens µm to 100 µm.

The flattening roller 12 is disposed so as to have gaps relative to the top end faces of the supply chamber 21 and the fabrication chamber 22. Accordingly, when the powder 20, which contains inorganic particles, is conveyed and supplied to the fabrication chamber 22 and then flattened, the top face of a layer of inorganic particle-containing powder is located at a higher level relative to the top end faces of the supply chamber 21 and the fabrication chamber 22. This can ensure that the flattening roller 12 is prevented from contacting the top end faces of the supply chamber 21 and the fabrication chamber 22, thus reducing damage of the flattening roller 12. Once the surface of the flattening roller 12 is damaged, a line is generated on the surface of the powder layer 31 supplied to the fabrication chamber 22 (see FIG. 1D), thereby tending to reduce flatness. On the flattening roller 12, a powder removal plate 13 is disposed as a powder removal member to contact the peripheral face of the flattening roller 12 and remove the powder 20 attached to the flattening roller 12.

Then, as depicted in FIG. 1B, the inorganic particle-containing powder 20 disposed at a higher level relative to the top end face of the supply chamber 21 is moved to the vicinity of the fabrication chamber 22 with rolling the flattening roller 12 in the direction of arrow, thereby conveying and supplying the metal particle-containing powder 20 to the fabrication chamber 22 (powder supply). Furthermore, as depicted in FIG. 1C, the flattening roller 12 is moved parallel to the stage face of the fabrication stage 24 in the fabrication chamber 22, thereby forming the powder layer 31 having a predetermined thickness Δt1 on the fabrication stage 24 in the fabrication chamber 22 (flattening). At that time, surplus of the inorganic particle-containing powder 20 unused for formation of the powder layer 31 falls into the surplus powder receiving chamber 29. After formation of the powder layer 31, the flattening roller 12 is moved to the vicinity of the supply chamber 21 to return (revert) to an initial position (original position), as depicted in FIG. 1D.

Note that the flattening roller 12 can move with keeping constant distances from the top end faces of the fabrication chamber 22 and the supply chamber 21. Such mobility with consistency enables formation of the powder layer 31 having a uniform height h (corresponding to stacking pitch Δt1) on the fabrication chamber 22 or the fabrication-liquid applied layer 30 formed preliminarily, with conveying the powder 20 onto the fabrication chamber 22 by the flattening roller 12. Although hereinafter description may be made without distinguishing the height h of the powder layer 31 from the stacking pitch Δt1, they refer to the same height and have the same meaning unless otherwise noted. In addition, the height h of the powder layer 31 may be derived by actual measurement, and so in this case, is preferably derived as a mean value for a plurality of locations.

Subsequently, as depicted in FIG. 1E, droplets of fabrication liquid 10 are discharged from a liquid discharge unit head 52 to form on the next powder layer 31, a stack of the fabrication-liquid applied layer 30 with a desired shape. The powder layer formation process and the fabrication-liquid applying process as described above are then repeated to stack the fabrication-liquid applied layer 30 newly formed. At that time, the new fabrication-liquid applied layer 30 is integrated with the underlying fabrication-liquid applied layer 30. Afterward, the powder layer formation process and the fabrication-liquid applying process are further repeated to complete a stack.

### [Examples]

Hereinafter, examples of the present disclosure will be illustrated, but the present disclosure is not limited to any of these examples.

In the following examples and comparative examples, the mean volume particle diameter of a base material and the mean volume particle diameter of inorganic oxide were measured as follows.

### <Mean Volume Particle Diameter of Base Material>

The mean volume particle diameter of a base material was measured using a particle size distribution measurement device (MICROTRAC MT3000II, Manufactured by MicrotracBEL Corp.)

### <Mean Volume Particle Diameter of Inorganic Oxide>

The mean volume particle diameter of inorganic oxide was measured using a nanoparticle size measurement device (NANOTRAC FLEX, Manufactured by MicrotracBEL Corp.)

### (Example 1)

### <Preparation of Three-dimensional fabricating powdered material>

As presented in Table 1, 0.025 parts by mass of SiOz (manufactured by Nippon Aerosil Co., Ltd., H-2000, mean volume particle diameter: 12 nm, surface-treated with hexamethyldisilazane) as inorganic oxide was added to and mixed with 100 parts by mass of AlSi₁₀Mg (manufactured by Toyo Aluminum K. K., Si10Mg30BB, mean volume particle diameter: 33 µm) as a base material, using a commercially available blender (manufactured by Coleman Japan Co., Ltd., OSTER CORE 16 speed blender). Subsequently, the base material having SiOz applied was subjected to sieving with a vibrating sieve (manufactured by Verder Scientific Co., Ltd., AS200). In this manner, Three-dimensional fabricating powdered material 1 was obtained.

Three-dimensional fabricating powdered material 1 thus obtained was measured for the mean volume particle diameter using a particle size measurement device (Manufactured by MicrotracBEL Corp., MICROTRAC HRA) and provided with 34 µm.

Next, the three-dimensional fabricating powdered material 1 thus obtained was assessed for "aerated bulk density" and "thermal stability" as follows. The results are presented in Table 2.

### <Aerated Bulk Density>

The aerated bulk density of Three-dimensional fabricating powdered material 1 was measured using a commercially available powder tester (manufactured by Hosokawa Micron Corporation, PT-S), and evaluated based on the following criteria. The results are presented in Table 2.

### [Evaluation Criteria]

++: having an aerated bulk density of 55% or more; +: having an aerated bulk density of 50% or more to less than 55%; -: having an aerated bulk density of less than 50%.

### <Thermal Stability>

Three-dimensional fabricating powdered material 1 was heat-treated at 140°C for 4 hours using a commercially available thermostat drier (manufactured by Yamato Scientific Co., Ltd., DKN402). The aerated bulk densities of Three-dimensional fabricating powdered material 1 before and after heat treatment were measured by the method described above, and thermal stability was evaluated based on the following evaluation criteria.

### [Evaluation Criteria]

++: having a variation of less than 1% in aerated bulk densities of a three-dimensional fabricating powdered material before and after heat treatment; +: having a variation of 1% or more to less than 3% in aerated bulk densities of a three-dimensional fabricating powdered material before and after heat treatment; -: having a variation of 3% or more in aerated bulk densities of a three-dimensional fabricating powdered material before and after heat treatment.

### <Preparation of Three-dimensional Fabricated Object and Sintered Body>

A fabrication liquid was prepared by dispersing 97 parts by mass of dimethylsulfoxide and 3 parts by mass of acrylic resin (manufactured by Kyoeisya Chemical Co., Ltd., product name: KC1700P) with a homomixer for 10 minutes.

The fabrication liquid thus obtained and Three-dimensional fabricating powdered material 1 was used to produce Three-dimensional fabricated object 1 in a shape-printing pattern having a size (length 70 mm x width 12 mm) as follows. (1) First, using a production device of three-dimensional fabricated objects as depicted in FIG. 1A, Three-dimensional fabricating powdered material 1 was conveyed from a supply chamber to a fabrication chamber, thereby forming on a support, a thin layer having a mean height of 100 µm build up with Three-dimensional fabricating powdered material 1. (2) Next, the fabrication liquid was applied (discharged) from a nozzle of a known ink-jet discharge head onto the surface of the thin layer formed of Three-dimensional fabricating powdered material 1, and the powdered material layer was left to cured. (3) Then, operations in the items (1) and (2) were repeated until providing a predetermined total mean height of 3 mm to serially stack cured thin layers of Three-dimensional fabricating powdered material 1, followed by maintaining the stack at 50°C for 4 hours and then at 100°C for 10 hours to undergo a drying process with a drier, thereby obtaining Three-dimensional fabricated object 1.

From the three-dimensional fabricated object 1 after drying, surplus of Three-dimensional fabricating powdered material 1 was removed with air blow.

### <Accuracy of Shape of Three-dimensional Fabricated Object (before Sintering)>

Then, the dimension of Three-dimensional fabricated object 1 (before sintering) was measured with a caliper, and accuracy of the shape was evaluated as the following evaluation criteria. The results are presented in Table 2.

### [Evaluation Criteria]

+: having a parallel shift of less than 1 mm between the top face and the bottom face of a three-dimensional fabricated object; -: having a parallel shift of 1 mm or more between the top face and the bottom face of a three-dimensional fabricated object.

### <Density of Three-dimensional Fabricated Object (before Sintering)>

Next, Three-dimensional fabricated object 1 (before sintering) was subjected to waterproofing, and then the density was measured by Archimedean method and evaluated in accordance with the following evaluation criteria. The results are presented in Table 2.

### [Evaluation Criteria]

++: having a density of 55% or more; +: having a density of 50% or more to less than 55%; -: having a density of less than 50%.

(4) Three-dimensional fabricated object 1 obtained in the item (3) was raised in temperature to 450°C over 2 hours under nitrogen atmosphere with a drier, then maintained at 450°C for 2 hours to undergo a degreasing process, and further subjected to sintering at 600°C under a vacuum condition in a sintering furnace. This produced Sintered body 1 having a good-looking surface. Sintered body 1 thus obtained was a completely integrated aluminum structure (metallic mass), and generates no damage even when slammed against a hard floor (concrete).

### <Density of Sintered Body>

Sintered body 1 thus obtained was subjected to oil impregnation under vacuum, and then the density was measured by Archimedean method, and evaluated based on the following evaluation criteria. The results are presented in Table 2.

### [Evaluation Criteria]

++: having a density of 95% or more; +: having a density of 90% or more to less than 95%; -: having a density of less than 90%.

### (Example 2)

Three-dimensional fabricating powdered material 2, Three-dimensional fabricated object 2, and Sintered body 2 were prepared as in Example 1 except for changing the mean volume particle diameter of AlSi₁₀Mg, as a base material, to 28 µm in Example 1, and evaluated as in Example 1. The results are presented in Table 2.

### (Example 3)

Three-dimensional fabricating powdered material 3, Three-dimensional fabricated object 3, and Sintered body 3 were prepared as in Example 1 except for changing the mean volume particle diameter of AlSi₁₀Mg, as a base material, to 25 µm in Example 1, and evaluated as in Example 1. The results are presented in Table 2.

### (Example 4)

Three-dimensional fabricating powdered material 4, Three-dimensional fabricated object 4, and Sintered body 4 were prepared as in Example 1 except for changing the mean volume particle diameter of AlSi₁₀Mg, as a base material, to 70 µm in Example 1, and evaluated as in Example 1. The results are presented in Table 2.

### (Example 5)

Three-dimensional fabricating powdered material 5, Three-dimensional fabricated object 5, and Sintered body 5 were prepared as in Example 1 except for changing the mean volume particle diameter of SiO₂, as inorganic oxide, to 7 µm in Example 1, and evaluated as in Example 1. The results are presented in Table 2.

### (Example 6)

Three-dimensional fabricating powdered material 6, Three-dimensional fabricated object 6, and Sintered body 6 were prepared as in Example 1 except for changing the mean volume particle diameter of SiO₂, as inorganic oxide, to 120 µm in Example 1, and evaluated as in Example 1. The results are presented in Table 2.

### (Example 7)

Three-dimensional fabricating powdered material 7, Three-dimensional fabricated object 7, and Sintered body 7 were prepared as in Example 1 except for changing the applied amount of SiO₂, as inorganic oxide, to 0.005% by mass in Example 1, and evaluated as in Example 1. The results are presented in Table 2.

### (Example 8)

Three-dimensional fabricating powdered material 8, Three-dimensional fabricated object 8, and Sintered body 8 were prepared as in Example 1 except for changing the applied amount of SiO₂, as inorganic oxide, to 1% by mass in Example 1, and evaluated as in Example 1. The results are presented in Table 2.

### (Example 9)

Three-dimensional fabricating powdered material 9, Three-dimensional fabricated object 9, and Sintered body 9 were prepared as in Example 1 except for changing the applied amount of SiO₂, as inorganic oxide, to 0.004% by mass in Example 1, and evaluated as in Example 1. The results are presented in Table 2.

### (Example 10)

Three-dimensional fabricating powdered material 10, Three-dimensional fabricated object 10, and Sintered body 10 were prepared as in Example 1 except for changing the applied amount of SiO₂, as inorganic oxide, to 1.1% by mass in Example 1, and evaluated as in Example 1. The results are presented in Table 2.

### (Example 11)

Three-dimensional fabricating powdered material 11, Three-dimensional fabricated object 11, and Sintered body 11 were prepared as in Example 1 except for changing SiO₂, as inorganic oxide, to TiOz (manufactured by Nippon Aerosil Co., Ltd., NKT90, mean volume particle diameter: 14 nm, surface-treated with alkylsilane) in Example 1, and evaluated as in Example 1. The results are presented in Table 2.

### (Example 12)

Three-dimensional fabricating powdered material 12, Three-dimensional fabricated object 12, and Sintered body 12 were prepared as in Example 1 except for changing SiO₂, as inorganic oxide, to Al₂O₃ (manufactured by Nippon Aerosil Co., Ltd., VP Alu C RK, mean volume particle diameter: 13 nm, surface-treated with alkylsilane) in Example 1, and evaluated as in Example 1. The results are presented in Table 2.

### (Example 13)

Three-dimensional fabricating powdered material 13, Three-dimensional fabricated object 13, and Sintered body 13 were prepared as in Example 1 except for changing the surface treatment agent of SiO₂, as inorganic oxide, to polydimethylsiloxan in Example 1, and evaluated as in Example 1. The results are presented in Table 2.

### (Example 14)

Three-dimensional fabricating powdered material 14, Three-dimensional fabricated object 14, and Sintered body 14 were prepared as in Example 1 except for changing the surface treatment agent of SiO₂, as inorganic oxide, to dimethyldichlorosilane in Example 1, and evaluated as in Example 1. The results are presented in Table 2.

### (Example 15)

Three-dimensional fabricating powdered material 15, Three-dimensional fabricated object 15, and Sintered body 15 were prepared as in Example 1 except for changing the surface treatment agent of SiO₂, as inorganic oxide, to a mixture of aminosilane and hexamethyldisilazane in Example 1, and evaluated as in Example 1. The results are presented in Table 2.

### (Example 16)

Three-dimensional fabricating powdered material 16, Three-dimensional fabricated object 16, and Sintered body 16 were prepared as in Example 1 except for changing the surface treatment agent of SiO₂, as inorganic oxide, to a mixture of aminosilane and polydimethylsiloxan in Example 1, and evaluated as in Example 1. The results are presented in Table 2.

### (Example 17)

Three-dimensional fabricating powdered material 17, Three-dimensional fabricated object 17, and Sintered body 17 were prepared as in Example 1 except for changing the surface treatment agent of SiO₂, as inorganic oxide, to alkylsilane in Example 1, and evaluated as in Example 1. The results are presented in Table 2.

### (Example 18)

Three-dimensional fabricating powdered material 18, Three-dimensional fabricated object 18, and Sintered body 18 were prepared as in Example 1 except for changing the mean volume particle diameter of AlSi₁₀Mg, as a base material, to 25 µm and changing the mean volume particle diameter of SiO₂, as inorganic oxide, to 7 µm in Example 1, and evaluated as in Example 1. The results are presented in Table 2.

### (Example 19)

Three-dimensional fabricating powdered material 19, Three-dimensional fabricated object 19, and Sintered body 19 were prepared as in Example 1 except for changing the mean volume particle diameter of AlSi₁₀Mg, as a base material, to 70 µm and changing the mean volume particle diameter of SiO₂, as inorganic oxide, to 7 µm in Example 1, and evaluated as in Example 1. The results are presented in Table 2.

### (Example 20)

Three-dimensional fabricating powdered material 20, Three-dimensional fabricated object 20, and Sintered body 20 were prepared as in Example 1 except for changing the mean volume particle diameter of AlSi₁₀Mg, as a base material, to 25 µm and changing the mean volume particle diameter of SiO₂, as inorganic oxide, to 120 µm in Example 1, and evaluated as in Example 1. The results are presented in Table 2.

### (Example 21)

Three-dimensional fabricating powdered material 21, Three-dimensional fabricated object 21, and Sintered body 21 were prepared as in Example 1 except for changing the mean volume particle diameter of AlSi₁₀Mg, as a base material, to 70 µm and changing the mean volume particle diameter of SiO₂, as inorganic oxide, to 120 µm in Example 1, and evaluated as in Example 1. The results are presented in Table 2.

### (Example 22)

Three-dimensional fabricating powdered material 22, Three-dimensional fabricated object 22, and Sintered body 22 were prepared as in Example 1 except for changing the mean volume particle diameter of AlSi₁₀Mg, as a base material, to 25 µm and changing the applied amount of SiO₂, as inorganic oxide, to 0.005% by mass in Example 1, and evaluated as in Example 1. The results are presented in Table 2.

### (Example 23)

Three-dimensional fabricating powdered material 23, Three-dimensional fabricated object 23, and Sintered body 23 were prepared as in Example 1 except for changing the mean volume particle diameter of AlSi₁₀Mg, as a base material, to 70 µm and changing the applied amount of SiO₂, as inorganic oxide, to 0.005% by mass in Example 1, and evaluated as in Example 1. The results are presented in Table 2.

### (Example 24)

Three-dimensional fabricating powdered material 24, Three-dimensional fabricated object 24, and Sintered body 24 were prepared as in Example 1 except for changing the mean volume particle diameter of AlSi₁₀Mg, as a base material, to 25 µm and changing the applied amount of SiO₂, as inorganic oxide, to 1% by mass in Example 1, and evaluated as in Example 1. The results are presented in Table 2.

### (Example 25)

Three-dimensional fabricating powdered material 25, Three-dimensional fabricated object 25, and Sintered body 25 were prepared as in Example 1 except for changing the mean volume particle diameter of AlSi₁₀Mg, as a base material, to 70 µm and changing the applied amount of SiO₂, as inorganic oxide, to 1% by mass in Example 1, and evaluated as in Example 1. The results are presented in Table 2.

### (Example 26)

Three-dimensional fabricating powdered material 26, Three-dimensional fabricated object 26, and Sintered body 26 were prepared as in Example 1 except for changing the mean volume particle diameter of SiO₂, as inorganic oxide, to 7 nm and changing the applied amount of SiO₂, as inorganic oxide, to 0.005% by mass in Example 1, and evaluated as in Example 1. The results are presented in Table 2.

### (Example 27)

Three-dimensional fabricating powdered material 27, Three-dimensional fabricated object 27, and Sintered body 27 were prepared as in Example 1 except for changing the mean volume particle diameter of SiO₂, as inorganic oxide, to 7 nm and changing the applied amount of SiO₂, as inorganic oxide, to 1% by mass in Example 1, and evaluated as in Example 1. The results are presented in Table 2.

### (Example 28)

Three-dimensional fabricating powdered material 28, Three-dimensional fabricated object 28, and Sintered body 28 were produced as in Example 1 except for changing the mean volume particle diameter of SiO₂, as inorganic oxide, to 120 nm and changing the applied amount of SiO₂, as inorganic oxide, to 0.005% by mass in Example 1, and evaluated as in Example 1. The results are presented in Table 2.

### (Example 29)

Three-dimensional fabricating powdered material 29, Three-dimensional fabricated object 29, and Sintered body 29 were prepared as in Example 1 except for changing the mean volume particle diameter of SiO₂, as inorganic oxide, to 120 nm and changing the applied amount of SiO₂, as inorganic oxide, to 1% by mass in Example 1, and evaluated as in Example 1. The results are presented in Table 2.

### (Example 30)

Three-dimensional fabricating powdered material 30, Three-dimensional fabricated object 30, and Sintered body 30 were prepared as in Example 1 except for changing the mean volume particle diameter of AlSi₁₀Mg, as a base material, to 25 µm, changing the mean volume particle diameter of SiO₂, as inorganic oxide, to 7 nm, and changing the applied amount of SiO₂, as inorganic oxide, to 0.005% by mass in Example 1, and evaluated as in Example 1. The results are presented in Table 2.

### (Example 31)

Three-dimensional fabricating powdered material 31, Three-dimensional fabricated object 31, and Sintered body 31 were prepared as in Example 1 except for changing the mean volume particle diameter of AlSi₁₀Mg, as a base material, to 25 µm, changing the mean volume particle diameter of SiO₂, as inorganic oxide, to 7 nm, and changing the applied amount of SiO₂, as inorganic oxide, to 1% by mass in Example 1, and evaluated as in Example 1. The results are presented in Table 2.

### (Example 32)

Three-dimensional fabricating powdered material 32, Three-dimensional fabricated object 32, and Sintered body 32 were prepared as in Example 1 except for changing the mean volume particle diameter of AlSi₁₀Mg, as a base material, to 25 µm, changing the mean volume particle diameter of SiO₂, as inorganic oxide, to 120 nm, and changing the applied amount of SiO₂, as inorganic oxide, to 0.005% by mass in Example 1, and evaluated as in Example 1. The results are presented in Table 2.

### (Example 33)

Three-dimensional fabricating powdered material 33, Three-dimensional fabricated object 33, and Sintered body 33 were prepared as in Example 1 except for changing the mean volume particle diameter of AlSi₁₀Mg, as a base material, to 25 µm, changing the mean volume particle diameter of SiO₂, as inorganic oxide, to 120 nm, and changing the applied amount of SiO₂, as inorganic oxide, to 1% by mass in Example 1, and evaluated as in Example 1. The results are presented in Table 2.

### (Example 34)

Three-dimensional fabricating powdered material 34, Three-dimensional fabricated object 34, and Sintered body 34 were prepared as in Example 1 except for changing the mean volume particle diameter of AlSi₁₀Mg, as a base material, to 70 µm, changing the mean volume particle diameter of SiO₂, as inorganic oxide, to 7 nm, and changing the applied amount of SiO₂, as inorganic oxide, to 0.005% by mass in Example 1, and evaluated as in Example 1. The results are presented in Table 2.

### (Example 35)

Three-dimensional fabricating powdered material 35, Three-dimensional fabricated object 35, and Sintered body 35 were prepared as in Example 1 except for changing the mean volume particle diameter of AlSi₁₀Mg, as a base material, to 70 µm, changing the mean volume particle diameter of SiO₂, as inorganic oxide, to 7 nm, and changing the applied amount of SiO₂, as inorganic oxide, to 1% by mass in Example 1, and evaluated as in Example 1. The results are presented in Table 2.

### (Example 36)

Three-dimensional fabricating powdered material 36, Three-dimensional fabricated object 36, and Sintered body 36 were prepared as in Example 1 except for changing the mean volume particle diameter of AlSi₁₀Mg, as a base material, to 70 µm, changing the mean volume particle diameter of SiO₂, as inorganic oxide, to 120 nm, and changing the applied amount of SiO₂, as inorganic oxide, to 0.005% by mass in Example 1, and evaluated as in Example 1. The results are presented in Table 2.

### (Example 37)

Three-dimensional fabricating powdered material 37, Three-dimensional fabricated object 37, and Sintered body 37 were prepared as in Example 1 except for changing the mean volume particle diameter of AlSi₁₀Mg, as a base material, to 70 µm, changing the mean volume particle diameter of SiO₂, as inorganic oxide, to 120 nm, and changing the applied amount of SiO₂, as inorganic oxide, to 1% by mass in Example 1, and evaluated as in Example 1. The results are presented in Table 2.

### (Example 38)

Three-dimensional fabricating powdered material 38, Three-dimensional fabricated object 38, and Sintered body 38 were prepared as in Example 1 except for changing a base material to α alumina (manufactured by Sumitomo Chemical Co., Ltd., A-21, mean volume particle diameter 50 µm) in Example 1, and evaluated as in Example 1. The results are presented in Table 2.

### (Comparative Example 1)

Three-dimensional fabricating powdered material 39, Three-dimensional fabricated object 39, and Sintered body 39 were prepared as in Example 1 except for changing the mean volume particle diameter of AlSi₁₀Mg, as a base material, to 20 µm in Example 1, and evaluated as in Example 1. The results are presented in Table 2.

### (Comparative Example 2)

Three-dimensional fabricating powdered material 40, Three-dimensional fabricated object 40, and Sintered body 40 were prepared as in Example 1 except for changing the mean volume particle diameter of AlSi₁₀Mg, as a base material, to 80 µm in Example 1, and evaluated as in Example 1. The results are presented in Table 2.

### (Comparative Example 3)

Three-dimensional fabricating powdered material 41, Three-dimensional fabricated object 41, and Sintered body 41 were prepared as in Example 1 except for changing the mean volume particle diameter of AlSi₁₀Mg, as a base material, to 130 nm in Example 1, and evaluated as in Example 1. The results are presented in Table 2.

### (Comparative Example 4)

Three-dimensional fabricating powdered material 42, Three-dimensional fabricated object 42, and Sintered body 42 were prepared as in Example 1 except for applying no SiOz as inorganic oxide in Example 1, and evaluated as in Example 1. The results are presented in Table 2.

### (Comparative Example 5)

Three-dimensional fabricating powdered material 43, Three-dimensional fabricated object 43, and Sintered body 43 were prepared as in Example 1 except for changing SiO₂, as inorganic oxide, to acrylic resin (manufactured by Nippon Paint Industrial Coatings Co., Ltd., FS-102, mean volume particle diameter: 80 nm) in Example 1, and evaluated as in Example 1. The results are presented in Table 2.

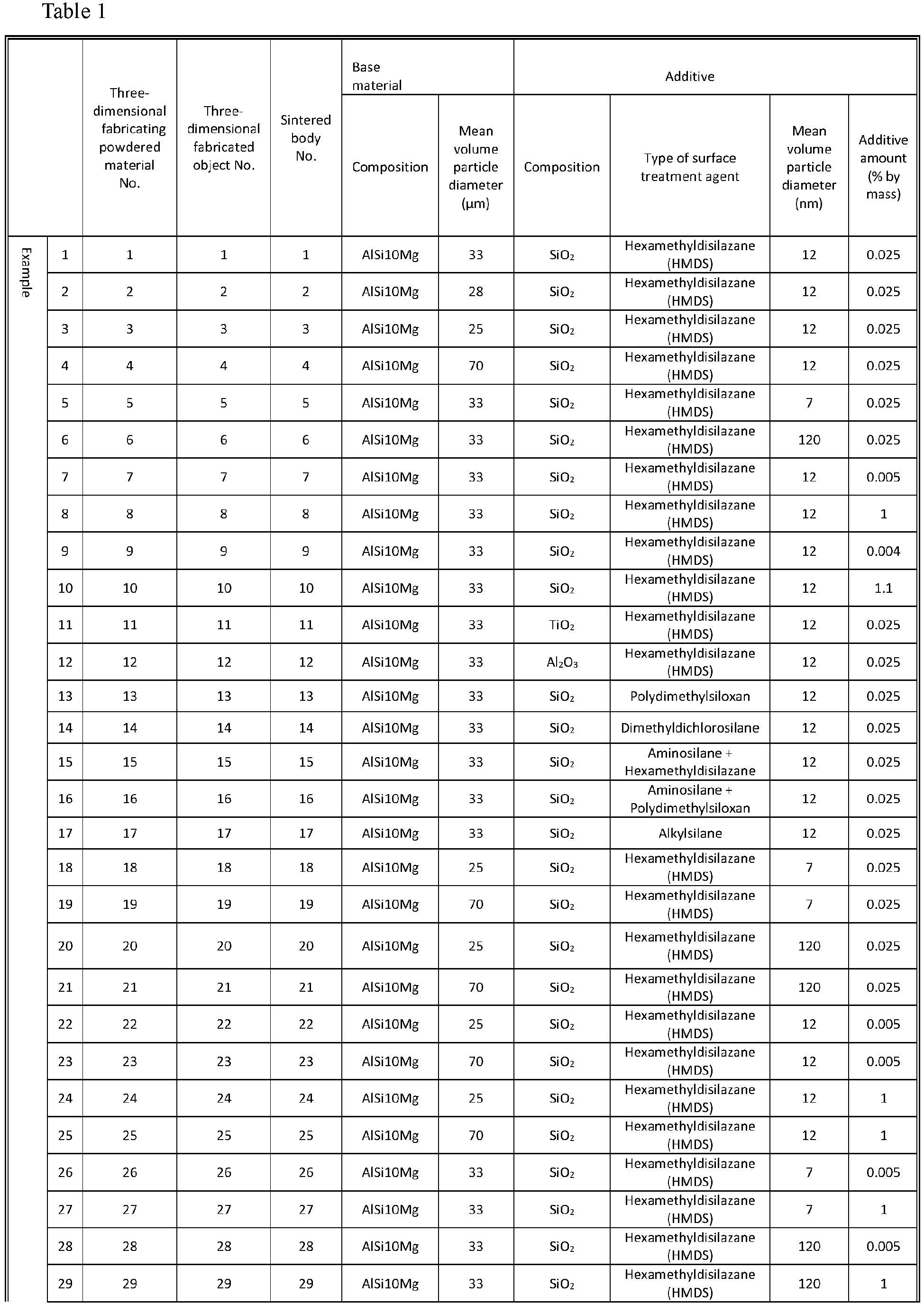

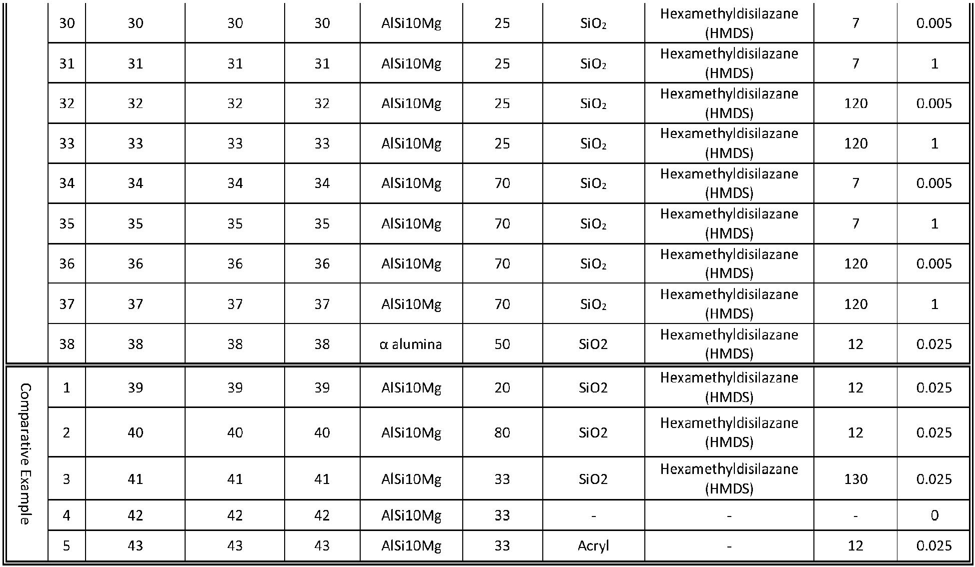

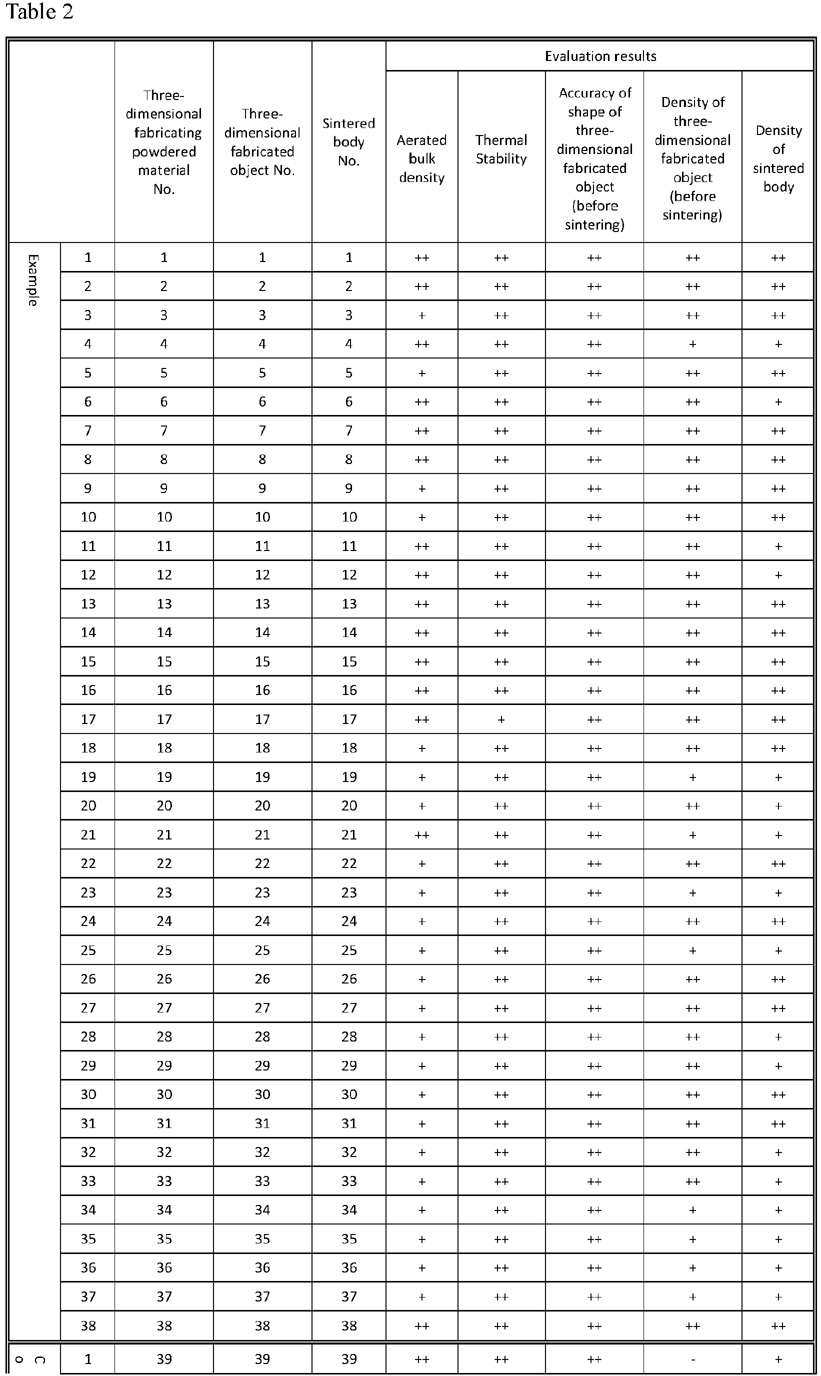

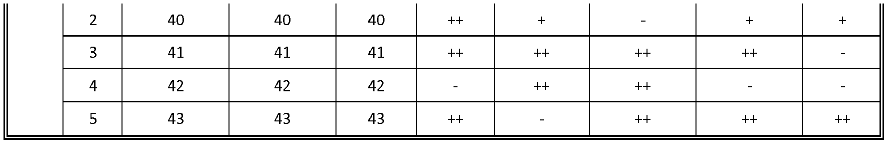

Embodiments of the present invention include the following items.
<1> A three-dimensional fabricating powdered material comprising: a base material containing an inorganic material and having a mean volume particle diameter of 25 µm or more to 70 µm or less; and an inorganic oxide having a mean volume particle diameter of 120 nm or less, attached to the base material .
<2> The three-dimensional fabricating powdered material set forth in the item <1>, wherein the inorganic oxide has a mean volume particle diameter of 7 nm or more to 120 nm or less.
<3> The three-dimensional fabricating powdered material set forth in any of the items <1> to <2>, wherein a proportion of the inorganic oxide to the base material is 0.005% or more by mass to 1% or less by mass.
<4> The three-dimensional fabricating powdered material set forth in any of the items <1> to <3>, wherein the inorganic oxide contains SiOz.
<5> The three-dimensional fabricating powdered material set forth in any of the items <1> to <4>, wherein the inorganic oxide is surface-treated with a treatment agent containing at least one selected from the group consisting of dimethyldichlorosilane (DDS), hexamethyldisilazane (HMDS), polydimethylsiloxane, and aminosilane.
<6> The three-dimensional fabricating powdered material set forth in any of the items <1> to <5>, wherein the inorganic material comprises at least one selected from the group consisting of metal and ceramics.
<7> The three-dimensional fabricating powdered material set forth in the item <6>, wherein the metal contains at least one selected from the group consisting of aluminum, stainless steel, titanium, copper, and alloys thereof.
<8> The three-dimensional fabricating powdered material set forth in any of the items <6> to <7>, wherein the metal has a surface not covered with a resin.
<9> A three-dimensional fabrication kit comprising: the three-dimensional fabricating powdered material set forth in any of the items <1> to <8>, and a fabrication liquid containing a resin and an organic solvent.
<10> The three-dimensional fabrication kit set forth in the item <9>, wherein the fabrication liquid has a viscosity of 5 mPa·s or more to 50 mPa·s or less at 25°C.
<11> A method of producing a three-dimensional fabricated object including:
   forming a powdered material layer with a three-dimensional fabricating powdered material, the three-dimensional fabricating powdered material comprising: a base material containing an inorganic material and having a mean volume particle diameter of 25 µm or more to 70 µm or less; and an inorganic oxide having a mean volume particle diameter of 120 nm or less, attached to the base material;
   applying a fabrication liquid to the powdered material layer; and
   serially repeating the forming and the applying to form a stack.
<12> The method of producing a three-dimensional fabricated object set forth in the item <11>, wherein the applying includes discharging the fabrication liquid to the powdered material layer in an ink-jet system.
<13> The method of producing a three-dimensional fabricated object set forth in any of the items <11> to <12>, further including:
   heating the stack to form a solidified object, and
   removing surplus powder attached to the solidified object to obtain a green body.
<14> The method of producing a three-dimensional fabricated object set forth in the item <13>, further including:
   heating the green body to form a degreased body with a resin removed out, and
   heating the degreased body to form a sintered body.

The three-dimensional fabricating powdered material set forth in any of the items <1> to <8>, the three-dimensional fabrication kit set forth in any of the items <9> to <10>, and the production method of a three-dimensional fabricated object set forth in any of the items <11> to <14> can solve several conventional problems, and achieve a purpose of the present disclosure.

Any one of the above-described operations may be performed in various other ways, for example, in an order different from the one described above.

## Claims

1. A three-dimensional fabricating powdered material comprising:
a base material comprising an inorganic material and having a mean volume particle diameter of 25 µm or more to 70 µm or less; and
an inorganic oxide having a mean volume particle diameter of 120 nm or less, the inorganic oxide attached to the base material.

2. The three-dimensional fabricating powdered material according to claim 1, wherein the inorganic oxide has a mean volume particle diameter of 7 nm or more to 120 nm or less.

3. The three-dimensional fabricating powdered material according to claim 1 or 2, wherein a proportion of the inorganic oxide to the base material is0.005% or more by mass to 1% or less by mass.

4. The three-dimensional fabricating powdered material according to any of claims 1 to 3, wherein the inorganic oxide comprises SiOz.

5. The three-dimensional fabricating powdered material according to any of claims 1 to 4, wherein the inorganic oxide is surface-treated with a treatment agent comprising at least one selected from the group consisting of dimethyldichlorosilane (DDS), hexamethyldisilazane (HMDS), polydimethylsiloxane, and aminosilane.

6. The three-dimensional fabricating powdered material according to any of claims 1 to 5, wherein the inorganic material comprises at least one selected from the group consisting of metal and ceramics.

7. The three-dimensional fabricating powdered material according to claim 6, wherein the metal comprises at least one selected from the group consisting of aluminum, stainless steel, titanium, copper, and alloys thereof.

8. The three-dimensional fabricating powdered material according to claim 6 or 7, wherein the metal has a surface not covered with a resin.

9. A three-dimensional fabrication kit comprising:
the three-dimensional fabricating powdered material according to any of claims 1 to 8; and
a fabrication liquid comprising a resin and an organic solvent.

10. The three-dimensional fabrication kit according to claim 9, wherein the fabrication liquid has a viscosity of 5 mPa·s or more to 50 mPa·s or less at 25°C.

11. A method of producing a three-dimensional fabricated object, the method comprising:
forming a powdered material layer with the three-dimensional fabricating powdered material according to any one of claims 1 to 8;
applying a fabrication liquid to the powdered material layer; and
serially repeating the forming and the applying to form a stack.

12. The method according to claim 11, wherein the applying includes discharging the fabrication liquid to the powdered material layer in an ink-jet system.

13. The method according to claim 11 or 12, further comprising:
heating the stack to form a solidified object, and
removing surplus powder attached to the solidified object to obtain a green body.

14. The method according to claim 13, further comprising:
heating the green body to form a degreased body with a resin removed out, and
heating the degreased body to form a sintered body.
